**Europäisches Patentamt**

**European Patent Office**

**Office européen des brevets**

(11) Veröffentlichungsnummer: **0 211 158**
**B1**

## EUROPÄISCHE PATENTSCHRIFT

(45) Veröffentlichungstag der Patentschrift:
**31.08.88**

(21) Anmeldenummer: **86106605.8**

(22) Anmeldetag: **15.05.86**

(51) Int. Cl.⁴: **F 16 L 21/02,** F 16 L 17/04

(54) **Rohrkupplung.**

(30) Priorität: **09.08.85 CH 3425/85**

(43) Veröffentlichungstag der Anmeldung:
**25.02.87 Patentblatt 87/9**

(45) Bekanntmachung des Hinweises auf die Patenterteilung:
**31.08.88 Patentblatt 88/35**

(84) Benannte Vertragsstaaten:
**AT BE CH DE FR GB IT LI NL SE**

(56) Entgegenhaltungen:
**DE-A-2 731 465**
**LU-A-82 667**
**US-A-2 341 164**

(73) Patentinhaber: **Straub, Immanuel, CH- 7323 Wangs
(CH)**

(72) Erfinder: **Straub, Immanuel, CH- 7323 Wangs (CH)**

(74) Vertreter: **Patentanwälte Schaad, Balass &
Partner, Dufourstrasse 101 Postfach, CH- 8034
Zürich (CH)**

LIBER, STOCKHOLM 1988

## Beschreibung

Die Erfindung betrifft eine Rohrkupplung der im Oberbegriff des Patentanspruches 1 genannten Art.

Eine solche Rohrkupplung ist beispielsweise aus der CH-A-620 510 (weitgehend inhaltgleich mit der DE-A-2 731 464 oder mit der US-A-4 108 479) bekannt. Diese bekannte Kupplung hat sich in der Praxis bewährt. Die Spannringe sind im bereich ihres kleineren Durchmessers durch gerade oder J-förmige Einschnitte lamelliert und die so entstandenen Lamellen sind zumindest an einer ihrer Seitenkante etwas verwunden, so dass die Lamellen sich gewissermassen jalousieartig überlappen. Dadurch entstehen an der Innenkante der Spannringe Krallen oder Zähne, die sich beim Spannen des Gehäuses an den Aussenflächen der zu verbindenden Rohrenden festkrallen und über das Gehäuse der Kupplung, an dem die Spannringe abgestützt sind, praktisch einen Formschluss zwischen den zu verbindenden Rohrenden ergeben.

Die zum Festkrallen bestimmten Enden der Lamellen oder Zähne sind bei der bekannten Kupplung durch eine ebene Stirnfläche gegeben, die praktisch rechtwinklig zu der inneren und der äusseren Mantelfläche der kegelstumpfförmigen Spannringe ist. Es hat sich nun gezeigt, dass wenn die bekannte Kupplung zum Verbinden von Rohren aus vergleichsweise hartem Material, beispielsweise Gusseisen, verwendet wird, eine erhebliche Kraft zum Spannen des Gehäuses erforderlich ist, bis der Innenrand der Spannringe sich zuverlässig und ausreichend rundum an der Aussenfläche der Rohre festgekrallt hat. Ebenso hat sich gezeigt, dass wenn die bekannte Kupplung zum Verbinden von Rohren aus einem vergleichsweise weichen, kriechfähigen Material, beispielsweise Aluminium oder Kupfer, verwendet wird, die zum Spannen des Gehäuses bis zum Festkrallen des Innenrandes der Spannringe erforderliche Kraft zwar erheblich geringer ist, aber die Eindringtiefe der Lamellen oder Zähne am Innenrand der Spannringe blieb unbestimmt, so dass, namentlich bei sehr dünnwandigen Rohren, diese an der Angriffslinie des Innenrandes der Spannringe möglicherweise eine Schwächung erfuhren.

Bei diesem Stand der Technik ist es als ein Zweck der Erfindung anzusehen, eine Kupplung der eingangs genannten Art zu schaffen, bei der auch bei Rohren aus härterem Material weniger Spannkraft aufzuwenden ist und/oder bei Rohren aus weicherem Material die Eindringtiefe des Innenrandes der Spannringe in das Rohrmaterial sich besser definieren lässt, wodurch bei dünnwandigen Rohren das Risiko einer Schwächung derselben weitgehend vermieden ist.

Dieser Zweck wird bei der vorgeschlagenen Kupplung dadurch erreicht, dass sie die im kennzeichnenden Teil des Patentanspruches 1 angegebenen Merkmale aufweist. Durch das konkave Profil des inneren Randes der Spannringe ist die zuerst mit den Rohren in Berührung gelangende Kante des Innenrandes spitzwinklig und dringt damit mit geringerem Kraftaufwand in das Rohrmaterial ein, jedoch nur soweit, bis das durch das Eindringen der spitzwinkligen Kante verdrängte Rohrmaterial das konkave Profil ausgefüllt hat. Dies ist beim Spannen des Gehäuses deutlich spürbar.

Zweckmässig ist das konkave Profil V-förmig, wobei dessen Öffnungswinkel zwischen 90° und 150° betragen kann. Bei der vorgeschlagenen Kupplung, namentlich für geringe Nenndurchmesser, kann sogar auf eine Lamellierung oder Segmentierung des Innenrandes der Spannringe verzichtet werden. Andererseits kann bei der vorgeschlagenen Kupplung der innere Rand der Spannringe auch segmentiert sein, ohne dass die Segmente zu verwinden wären.

Ausführungsbeispiele der Erfindung sind nachstehend anhand der Zeichnung näher beschrieben. Es zeigt:

| | |
|---|---|
| Fig. 1 | eine Stirnansicht einer Kupplung bei völlig entspanntem Gehäuse, |
| Fig. 2 | oben eine Seitenansicht und unten einen Längsschnitt durch die Kupplung der Fig. 1, |
| Fig. 3 | in Abwicklung einen Abschnitt eines lamellierten Spannringes, |
| Fig. 4 | eine Ansicht aus der Richtung des Pfeiles IV der Fig. 3, |
| Fig. 5 | einen Schnitt längs der Linie V-V der Fig.3, |
| Fig. 6 | einen schematischen vereinfachten Schnitt durch einen Spannring, dessen Aussenrand im Gehäuse abgestützt ist und dessen innerer Rand in die Aussenfläche eines Rohres eingedrungen ist, und |
| Fig. 7 + 8 | in ähnlicher Darstellungsweise wie Fig. 3 Abschnitte weiterer Ausführungsformen der Spannringe. |

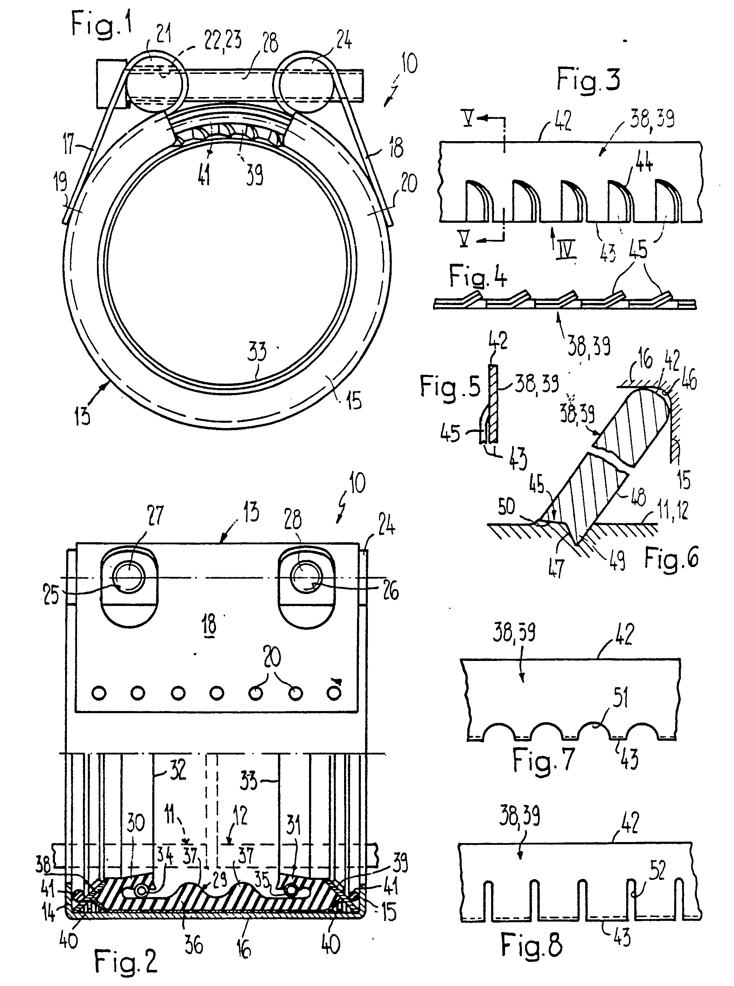

Die in den Fig. 1 und 2 dargestellte Rohrkupplung 10 besitzt ein schellenartig um zu verbindende Rohrenden 11, 12 (gestrichelt unten in Fig. 2 angedeutet) spannbares Gehäuse 13. An beiden Stirnseiten weist das Gehäuse 13 nach innen gerichtete Endflansche 14, 15 (Fig. 2) und dazwischen einen zylindrischen Teil 16 auf. Wie der Fig. 1 zu entnehmen ist, sind aus den längsseitigen Enden des zylindrischen Teiles 16 zwei Lappen 17, 18 nach aussen umgebogen und wieder an der Aussenseite des zylindrischen Teiles bei 19 bzw. 20 festgeschweisst. Der Lappen 17 umschliesst einen Stab 21, der zwei durchgehende Querbohrungen 22, 23 aufweist. Der Lappen 18 umschliesst einen weiteren Stab 24, der mit zwei mit einem Innengewinde versehenen Querbohrungen 25, 26 versehen ist. Die Stäbe 21 und 24, die durch die Lappen 17 bzw. 18 gehalten, jedoch verdrehbar sind, sind durch zwei Gewindebolzen 27, 28 aneinander gekoppelt, wobei der Kopf jedes der frei durch die Bohrungen 22 bzw. 23 greifenden Gewindebolzen 27, 28 am Stab 21 ansteht. Durch Anziehen der Bolzen 27, 28 lässt sich das Gehäuse 13 verengen.

Das Gehäuse 13 umschliesst eine in ihrem Axialquerschnitt C-förmige, nach innen offene Dichtmanschette 29 aus einem elastomeren Material, beispielsweise aus einem synthetischen Gummi. Die nach innen ragenden Dichtlippen 30, 31 der Dichtmanschette 29 enden in einer scharfen Dichtkante 32, 33 und sind über Schraubenfederringe 34, 35 auf dem Steg 36 der Manschette 29 abgestützt. Der Steg 36 der Dichtmanschette 29 ist mit nach innen ragenden Wülsten 37 versehen, die der Versteifung des Steges 36 dienen und verhindern, dass dieser sich, namentlich bei fortgesetzter Wärmewechselbeanspruchung der Dichtmanschette 29, von der Innenwand des Gehäuses 13 abhebt.

Die beiden Stirnseiten der Dichtmanschette 29 liegen je flächig an der zugekehrten äusseren Mantelfläche eines bezüglich seines Durchmessers verengungsfähigen Spannringes 38 bzw. 39 an, welche mit ihrem grösseren Durchmesser oder äusseren Rand in der Kehle zwischen dem zylindrischen Teil 16 einerseits und dem entsprechenden Endflansch 14 bzw. 15 andererseits des Gehäuses 13 abgestützt sind und dort darüberhinaus von einem Sprengring 40 mit dreieckigem und einem Sprengring 41 mit rundem Querschnitt eingefasst sind. Der Fig. 1 ist noch zu entnehmen, dass die Spannringe 38, 39 an ihrem inneren Rand lamelliert sind, und dass die Lamellen eine Schränkung aufweisen.

Wird nun die Kupplung 10 ungespannt auf die Rohrenden 11, 12 aufgezogen und werden danach die Bolzen 27, 28 angezogen, verengt sich das Gehäuse 13. Die Dichtmanschette 29 wird dabei gestaucht und - in Ermangelung anderer Möglichkeiten - weicht sie, ebenfalls unter Verringerung ihres Innendurchmessers nach innen aus. Dabei gelangen die Dichtkanten 32, 33 als erste in dichtende Anlage auf den Aussenumfang der Rohre und bei weiterem Spannen der Bolzen 27, 28 gerät auch der innere Rand der Spannringe 38, 39 in Eingriff mit der Aussenseite der Rohre.

Um nun zu den wichtigsten Merkmalen der vorgeschlagenen Rohrkupplung zu gelangen, wird auf die Fig. 3 - 6 verwiesen.

Man erkennt in Fig. 3 in Abwicklung einen Abschnitt der Spannringe 38, 39. Der äussere Rand der Spannringe ist mit 42 bezeichnet, der innere Rand dagegen mit 43. Vom inneren Rand 43 gehen J-förmige Einschnitte 44 aus, und die durch diese Einschnitte 44 entstandenen Lamellen sind etwas aus der Mantelfläche des Kegelstumpfes ausgebogen oder verwunden. Aus Fig. 5 ist deutlich ersichtlich, dass der innere Rand 43 ein konkaves Profil aufweist, wobei dieses Profil die Form eines einen stumpfen Winkel einschliessenden V aufweist. Der äussere Rand 42 dagegen ist verrundet.

Die Wirkungsweise der Spannringe 38, 39 mit dem besonderen Profil ihres Innenrandes sei nun anhand der Fig. 6 erläutert. Man erkennt darin einen (verkürzten und vereinfachten) Querschnitt durch einen der Spannringe 38, 39, wobei der Einfachheit halber in Fig. 6 die diesen einfassenden Sprengringe 40, 41 nicht dargestellt sind. Der äussere, verrundete Rand 42 ist in der Kehle zwischen dem Endflansch 15 und dem zylindrischen Teil 16 des Gehäuses 13 abgestützt. Der innere Rand 43 ist mit dem V-förmigen Profil versehen. Der eine Schenkel 47 dieses Profils bildet zusammen mit der inneren Mantelfläche 48 des kegelstumpfförmigen Spannringes 38, 39 eine spitzwinklige Schneide 49, die - beim Anziehen der Gewindebolzen 27, 28 - in das Material der Rohrenden 11, 12 eindringt. Dabei wird Rohrmaterial verdrängt bzw. aufgeworfen. Der andere Schenkel 50 des V-Profiles bildet dagegen mit dem durch die spitzwinklige Schneide 49 aufgeworfenen Rohrmaterial ein Anschlagpaar, das ein weiteres Eindringen der Schneide 49 in das Rohrmaterial praktisch verhindert. Das Erreichen des in Fig. 6 schematisch dargestellten Zustandes, nämlich das für eine einwandfreie auch mechanische Verbindung der Rohrenden ausreichende Zusammenziehen bzw. Spannen des Gehäuses 13 ist beim Anziehen der Bolzen 27, 28 deutlich spürbar, denn das zum Anziehen aufzuwendende Drehmoment wird plötzlich grösser, sobald das V-förmige Profil 47, 50 mit aufgeworfenem bzw. verdrängtem Rohrmaterial gefüllt ist.

Ähnlich ist die Wirkungsweise bei der Verwendung von Spannringen gemäss Fig. 3 - 5. Dort greifen zuerst jene Abschnitte des inneren Randes 43 an den Aussenflächen der Rohre an, die zu den abgewinkelten Lamellen 45 gehören. Ein weiteres Anziehen der Bolzen 27, 28 macht dann die Abwinkelung dieser Abschnitte teilweise rückgängig, bis dann die unabgewinkelten Abschnitte des inneren Randes auch auf die Aussenfläche der Rohre auftreffen und sich dort eingraben.

Die in den Fig. 7 und 8 dargestellten Ausführungsformen der Spannringe 38, 39 unterscheiden sich von der in den Fig. 3 - 5 dargestellten Ausführungsform lediglich darin, dass deren innerer Rand 43 zwar ebenfalls segmentiert ist, aber die einzelnen Segmente keine "Schränkung" wie in den Fig. 3 - 5 aufweisen. In Fig. 7 ist die Segmentierung durch kreisbogenförmige Kerben 51 und in Fig. 8 durch Schlitze 52 realisiert. Der äussere Rand 42 ist auch bei diesen Ausführungsformen verrundet, während der segmentierte, innere Rand 43 ebenfalls das konkave, V-förmige Profil aufweist.

Das konkave Profil des Innenrandes der Spannringe braucht nicht V-förmig zu sein. Es kann auch kreisbogenförmig sein. In letzterem Falle ist aber das ausreichende Eindringen des inneren Randes beim Anziehen der Bolzen weniger deutlich spürbar als beim V-förmigen Profil.

## Patentansprüche

1. Rohrkupplung mit einem schellenartigen, um die zu verbindenden Rohrenden (11, 12) spannbaren Gehäuse (13) mit radial nach innen gerichteten Endflanschen (14, 15), in welchem Gehäuse (13) eine im Axialquerschnitt C-förmige, nach innen offene Dichtmanschette (29) aus einem Elastomer eingeschlossen ist, deren beide Stirnseiten je auf der ihnen zugekehrten Mantelfläche eines kegelstumpfförmigen, verengungsfähigen Spannringes (38, 39) anliegt, von denen jeder mit seinem äusseren Rand (42) auf der Innenseite des Gehäuses (13) im Bereich dessen Überganges zu einem der Endflansche (14, 15) abgestützt ist und mit seinem dessen kleineren Durchmesser bestimmenden inneren Rand (43) beim Spannen des Gehäuses (13) zum Festkrallen am Umfang eines der Rohrenden (11, 12) bestimmt ist, dadurch gekennzeichnet, dass der zum Festkrallen am Umfang der Rohrenden (11, 12) bestimmte innere Rand (43) der Spannringe (38, 39) ein konkaves Profil (47, 50) aufweist.

2. Rohrkupplung nach Patentanspruch 1, dadurch gekennzeichnet, dass das konkave Profil (47, 50) V-förmig ist.

3. Rohrkupplung nach Patentanspruch 2, dadurch gekennzeichnet, dass der Öffnungswinkel des V-förmigen Profils (47, 50) zwischen 90° und 150° beträgt.

4. Rohrkupplung nach einem der vorangehenden Patentansprüche, dadurch gekennzeichnet, dass der Innenrand (43) der Spannringe (38, 39) segmentiert ist.

## Claims

1. A pipe coupling having a collar-like housing (13) which can be tightened round the ends (11, 12) of the pipes to be connected and has end flanges (14, 15) directed radially inwards, in which housing (13) there is enclosed a sealing sleeve (29) of an elastomer which is C-shaped in axial cross-section, open towards the inside and each end face of which bears against the peripheral surface, adjacent thereto, of a frusto-conical clamping ring (38, 39) which is capable of contraction, each of which clamping rings is supported, by its outer edge (42) on the inside of the housing (13) in the region of its transition to an end flange (14, 15) and is adapted to dig into the circumference of one of the pipe ends (11, 12) with its inner edge (43) defining its smaller diameter, during the tightening of the housing (13), characterised in that the inner edge (43) of the clamping rings (38, 39) adapted to dig into the circumference of the pipe ends (11, 12) has a concave profile (47, 50).

2. A pipe coupling according to patent claim 1, characterised in that the concave profile (47, 50) is V-shaped.

3. A pipe coupling according to patent claim 2, characterised in that the opening angle of the V-shaped profile (47, 50) is between 90° and 150°.

4. A pipe coupling according to any one of the preceding patent claims, characterised in that the inner edge (43) of the clamping rings (38, 39) is segmented.

## Revendications

1. Raccord pour tuyaux qui comprend une enveloppe (13) en forme de collier pouvant être serrée autour des extrémités de tuyaux (11, 12) à relier et présentant des brides terminales (14, 15) orientées radialement vers l'intérieur, enveloppe (13) dans laquelle est enfermée une garniture d'étanchéité cylindrique (29), à section axiale en forme de C et ouverte vers l'intérieur, composée d'un élastomère et dont les deux côtés frontaux prennent chacun appui sur la surface périphérique, leur faisant face, d'une bague de serrage tronconique rétrécissable (38, 39), chacune desquelles bagues de serrage prend appui avec son bord extérieur (42) sur le côté intérieur de l'enveloppe (13) au niveau de la transformation de celle-ci en une des brides terminales (14, 15) et est destinée à s'accrocher, lors du serrage de l'enveloppe (13), à la périphérie de l'une des extrémités de tuyaux (11, 12) avec son bord intérieur (43) déterminant son petit diamètre, caractérisé en ce que le bord intérieur (43) des bagues de serrage (38, 39), destiné à s'accrocher à la périphérie des extrémités de tuyaux (11, 12), présente un profil concave (47, 50).

2. Raccord pour tuyaux selon la revendication 1, caractérisé en ce que le profil concave (47, 50) est en forme de V.

3. Raccord pour tuyaux selon la revendication 2, caractérisé en ce que l'angle d'ouverture du profil en V (47, 50) est compris entre 90 et 150°.

4. Raccord pour tuyaux selon l'une quelconque des revendications précédentes, caractérisé en ce que le bord intérieur (43) des bagues de serrage (38, 39) est segmenté.

Fig.1
Fig.2
Fig.3
Fig.4
Fig.5
Fig.6
Fig.7
Fig.8